# EUROPEAN PATENT SPECIFICATION

(11) **EP 1 826 060 B1**
(45) Date of publication and mention of the grant of the patent: **17.06.2009**
(21) Application number: 07102994.6
(22) Date of filing: 23.02.2007
(51) Int. Cl.: B60N 3/04, B60R 7/02, B60R 13/01

(54) **Cover mat for a loading surface of an automobile vehicle**
Abdeckmatte für die Ladefläche eines Fahrzeuges
Tapis de recouvrement pour une surface de chargement d'un véhicule automobile

(30) Priority: 24.02.2006 IT TO20060130
(43) Date of publication of application: 29.08.2007
(73) Proprietor: FIAT AUTO S.p.A., 10135 Torino (IT)
(72) Inventor: Da Fre', Dario, 10135 Torino (IT)
(74) Representative: Quinterno, Giuseppe

(56) References cited:
- WO-A-01/47747
- DE-A1- 4 234 812

## Description

The present invention relates to a cover mat for a loading surface of an automobile vehicle.

DE 4234812 shows a cover not according to the preamble of claim 1.

An object of the present invention is to provide a cover mat enabling better use of a loading surface of an automobile vehicle, in particular of a baggage space, making it possible to provide a plurality of adjacent compartments, separated by barriers, in order better to contain articles being transported.

This and other objects are achieved by the invention with a cover mat characterised in that it comprises at least one group of articulations or hinges extending along substantially parallel fold lines and provided in an intermediate portion of the mat so that the mat can assume:
- an extended and substantially planar configuration; and
- a contracted configuration in which the mat is folded at said articulations in order to form a barrier which projects upwards and divides the bearing surface of the mat into two separate adjacent compartments.

In a particular embodiment, the mat comprises at least one group of three articulations or hinges about which, in the contracted configuration, the mat is folded alternately in opposite directions so as to form a barrier having a cross section substantially shaped as an upturned V.

According to a further characteristic feature, the mat may have at least one end articulation or hinge which extends along a fold line substantially parallel to at least the one group of articulations or hinges, and which forms an end flap of the mat which, in the above-mentioned extended configuration, is folded with respect to the adjacent horizontal portion of the mat and, in the contracted configuration, is extended and substantially coplanar with the adjacent horizontal portion of the mat. Advantageously, in the direction at right angles to these articulations or hinges, the extension of at least this one end flap of the mat is substantially equal to the reduction of the extension of the mat when it passes from the extended to the contracted configuration.

Further characteristic features and advantages of the invention are set out in the following detailed description, given purely by way of non-limiting example, and made with reference to the accompanying drawings, in which:
Fig. 1 is a perspective view of a cover mat for a loading space of an automobile vehicle of the present invention;
Fig. 2 is a partial diagrammatic lateral view of a loading space of an automobile vehicle provided with a cover mat of the invention, shown in the extended configuration; and
Fig. 3 is a partial diagrammatic lateral view similar to that of Fig. 2 showing the cover mat of the invention in a contracted configuration.

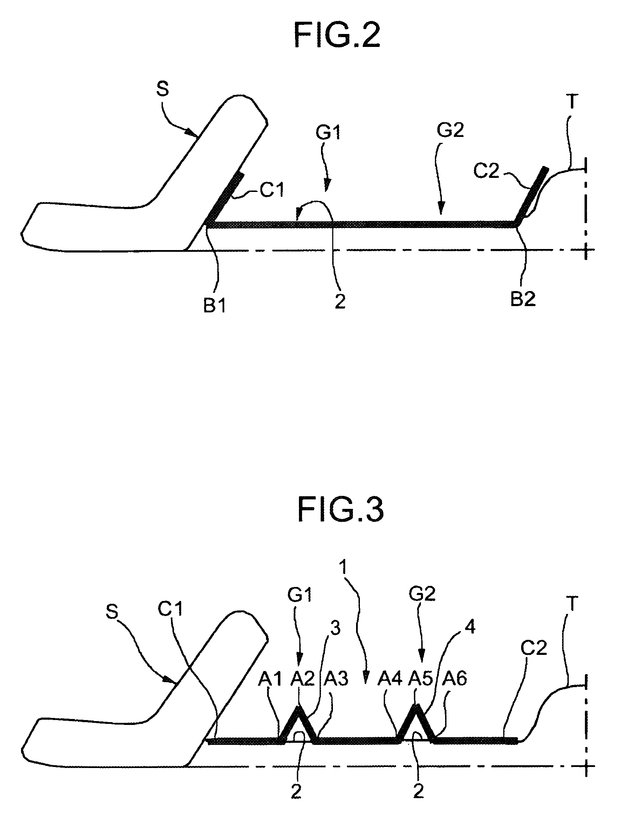

In the drawings, a cover mat of the invention is shown overall by 1 and is adapted to be disposed on a loading surface 2 (Figs. 2 and 3) of an automobile vehicle.

In the embodiment shown by way of non-limiting example, the mat 1 has a substantially rectangular shape. It is made from a known material whose dimensional stability is sufficient and appropriate to the characteristic features to be described below.

In the embodiment shown, the mat 1 has two groups G1 and G2 of articulations or hinges A1, A2, A3 and A4, A5, A6 which extend along substantially parallel fold lines disposed in intermediate portions of the mat.

The articulations A1-A3 and A4-A6 are advantageously integral hinges made in one piece with the mat 1, for instance by scoring operations.

In the embodiment shown, the mat 1 further comprises two similar end articulations B1 and B2 parallel to the other articulations described above. These end articulations define respective end flaps C1 and C2 of the mat.

In use, the mat 1 described above may assume an extended, substantially planar, configuration, as shown in Fig. 2: in this configuration, the whole surface of the mat 1, with the exception of its end flaps C1 and C2, is substantially coplanar and forms a single loading area or compartment. The end flaps C1 and C2 act as end walls and are, for instance, disposed adjacent to the back of a seat or bench S and against a raised formation or rear wall T of the vehicle.

The mat 1 may also assume a contracted working configuration, for instance as shown in Fig. 3. In this configuration, the mat 1 is folded at the groups G1 and G2 of articulations in order to form two barriers 3 and 4 projecting upwards. Each of these barriers divides the adjacent loading surface of the mat into two separate adjacent compartments.

In the embodiment shown in Fig. 3, both groups G1 and G2 of articulations are in the folded configuration, while the end articulations B1 and B2 are "open" so that the associated end flaps C1 and C2 of the mat are extended on the loading surface 2 of the automobile vehicle. Advantageously, the longitudinal extension of each of the end flaps C1 and C2 is substantially equal to the reduction of the extension of the mat 1 when it passes from the extended to the contracted configuration following the folding of a group G1 or G2 of articulations.

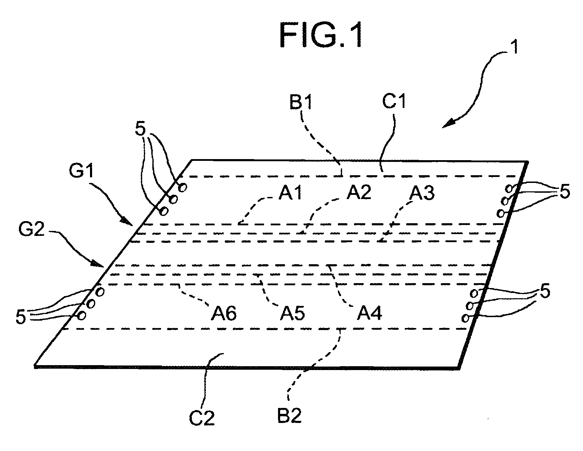

Preferably, as shown in Figs. 1 and 3, each group G1 and G2 of articulations comprises three adjacent articulations with the result that the barriers 3 and 4 (Fig. 3) which are formed in the contracted configuration have a cross section substantially shaped as an upturned V. At each barrier 3 or 4, the mat 1 is folded alternately in opposite directions.

In alternative embodiments not shown, each group of articulations may also comprise four or more articulations or hinges.

In Fig. 1, the mat 1 is associated with retaining members adapted to hold it in the or in a contracted configuration. In the non-limiting embodiment shown, these retaining members comprise a plurality of openings 5 disposed along the sides of the mat 1 at right angles to the above-described articulations and adapted to be engaged by pin-shaped projections (not shown) disposed on the loading surface 2 of the automobile vehicle.

In addition, or as an alternative, the mat could be associated, in order to hold it in the contracted configuration, with microhook or microloop connection members of the type known commercially under the registered trademark Velcro, or the like.

Without prejudice to the principle of the invention, wide-ranging variations may obviously be made to what has been described and illustrated purely by way of non-limiting example, without thereby departing from the scope of the invention as set out in the accompanying claims.

## Claims

1. A cover mat (1) for a loading surface (2) of an automobile vehicle, **characterised in that** it comprises at least one group (G1, G2) of articulations or hinges (A1-A3, A4-A6) extending along substantially parallel fold lines and provided in an intermediate portion of the mat (1) so that the mat (1) can assume:
- an extended and substantially planar configuration, and
- a contracted configuration in which the mat (1) is folded at said articulations (A1-A3, A4-A6) in order to form a barrier (3, 4) which projects upwards and divides the bearing surface of the mat into two separate adjacent compartments.

2. A mat according to claim 1, comprising at least one group (G1, G2) of three articulations or hinges (A1-A3, A4-A6) at which, in the contracted configuration, the mat (1) is folded alternately in opposite directions so as to form a barrier (3, 4) having a cross section substantially shaped as an upturned V.

3. A mat according to claim 1 or 2, comprising a plurality of groups (G1, G2) of articulations or hinges (A1-A3, A4-A6) spaced from one another.

4. A mat according to any one of the preceding claims, comprising at least one end articulation or hinge (B1, B2) extending along a fold line substantially parallel to at least the one group (G1, G2) of articulations or hinges, and defining an end flap (C1, C2) of the mat (1) which, in the extended configuration of the mat (1), is folded with respect to the adjacent horizontal portion of the mat and, in the contracted configuration, is extended and substantially coplanar with the adjacent horizontal portion of the mat (1).

5. A mat according to claim 4, in which, in the direction at right angles to these articulations or hinges (A1-A3, A4-A6, B1, B2), at least this one end flap (C1, C2) of the mat (1) has an extension substantially equal to the reduction of the extension of the mat (1) when it passes from the extended to the contracted configuration.

6. A mat according to any one of the preceding claims, associated with retaining means (5) adapted to hold the mat (1) in the contracted configuration.

7. A mat according to claim 6, wherein the retaining means comprise a plurality of openings (5) provided in the mat (1) and adapted to be engaged by corresponding projections disposed on the loading surface (2).

8. A mat according to claim 6 or 7, wherein the retaining means comprise microhook/microloop connection members.

9. A mat according to any one of the preceding claims, wherein the articulations (A1-A3, A4-A6, B1, B2) are integral hinges made in one piece with the mat (1).

## Patentansprüche

1. Abdeckmatte (1) für eine Ladefläche (2) eines Kraftfahrzeugs, **dadurch gekennzeichnet, dass** sie wenigstens eine Gruppe (G1, G2) von Gelenkverbindungen oder Scharnieren (A1-A3, A4-A6) umfasst, die sich entlang im Wesentlichen paralleler Faltlinien erstrecken und in einem Zwischenabschnitt der Matte (1) vorhanden sind, so dass die Matte (1) einnehmen kann:
eine ausgebreitete und im Wesentlichen plane Form, und
eine zusammengeschobene Form, in der die Matte (1) an den Gelenkverbindungen (A1-A3, A4-A6) zusammengefaltet ist, um eine Barriere (3, 4) zu bilden, die nach oben vorsieht und die Auflagefläche der Matte in zwei separate benachbarte Fächer unterteilt.

2. Matte nach Anspruch 1, die wenigstens eine Gruppe (G1, G2) aus drei Gelenkverbindungen oder Scharnieren (A1-A3, A4-A6) umfasst, an denen in der zusammengeschobenen Form die Matte (1) abwechselnd in einander entgegengesetzte Richtungen gefaltet ist, so dass eine Barriere (3, 4) entsteht, die einen Querschnitt hat, der im Wesentlichen wie ein umgedrehtes "V geformt ist.

3. Matte nach Anspruch 1 oder 2, die eine Vielzahl von Gruppen (G1, G2) von Gelenkverbindungen oder Scharnieren (A1-A3, A4-A6) umfasst, die voneinander beabstandet sind.

4. Matte nach einem der vorangehenden Ansprüche, die wenigstens eine End-Gelenk verbindung oder ein End-Schamier (B1, B2) umfasst, die/das sich entlang einer Faltlinie im Wesentlichen parallel zu der wenigstens einen Gruppe (G1, G2) von Gelenkverbindungen oder Scharnieren erstreckt, und die/das eine End-Klappe (C1, C2) der Matte (1) bildet, die In der ausgebreiteten Form der Matte (1) in Bezug auf den benachbarten horizontalen Abschnitt der Matte gefaltet ist und in der eingezogenen Form ausgebreitet und im Wesentlichen koplanar zu dem benachbarten horizontalen Abschnitt der Matte (1) ist.

5. Matte nach Anspruch 4, wobei in der Richtung im rechten Winkel zu diesen Gelenkverbindungen oder Scharnieren (A1-A3, A4-A6, B1, B2) wenigstens diese eine End-Klappe (C1, C2) der Matte (1) eine Ausdehnung hat, die im Wesentlichen der Verringerung der Ausdehnung der Matte (1) beim Übergang von der ausgebreiteten Form in die zusammengeschobene Form gleich ist.

6. Matte nach einem der vorangehenden Ansprüche, die mit Halteeinrichtungen (5) verbunden ist, die zum Halten der Matte (1) in der zusammengeschobenen Form eingerichtet sind.

7. Matte nach Anspruch 6, wobei die Halteeinrichtungen eine Vielzahl von Öffnungen (5) umfassen, die in der Matte (1) vorhanden und so eingerichtet sind, dass sie mit entsprechenden Vorsprüngen in Eingriff kommen, die an der Ladefläche (2) angeordnet sind.

8. Matte nach Anspruch 6 oder 7, wobei die Halteeinrichtungen Mikrohaken-/Mikroschlaufen-Verbindungselemente umfassen.

9. Matte nach einem der vorangehenden Ansprüche, wobei die Gelenkverbindungen (A1-A3, A4-A6, B1, 82) integrale Scharniere sind, die aus einem Stück mit der Matte (1) bestehen.

## Revendications

1. Tapis de couverture (1) pour une surface de chargement (2) d'un véhicule automobile, **caractérisé en ce qu'**il comprend au moins un groupe (G1, G2) d'articulations ou charnières (A1-A3, A4-A6) s'étendant le long de lignes de pliage sensiblement parallèles et placées dans une partie intermédiaire du tapis (1) de telle manière que le tapis (1) peut prendre :
une configuration étendue et sensiblement plate, et
une configuration contractée dans laquelle le tapis (1) est plié au niveau desdites articulations ou charnières (A1-A3, A4-A6) afin de former une séparation (3, 4) qui fait saillie vers le haut et divise la surface de support du tapis en deux compartiments adjacents.

2. Tapis selon la revendication 1, comprenant au moins un groupe (G1, G2) de trois articulations ou charnières (A1-A3, A4-A6) au niveau desquelles, dans la configuration contractée, le tapis (1) est plié alternativement dans des directions opposées de façon à former une séparation (3, 4) ayant une section transversale sensiblement formée comme un V retourné.

3. Tapis selon la revendication 1 ou 2, comprenant une pluralité de groupes (G1, G2) d'articulations ou charnières (A1-A3, A4-A6) espacés les uns des autres.

4. Tapis selon l'une quelconque des revendications précédentes, comprenant au moins une articulation ou charnière d'extrémité (B1, B2) s'étendant le long d'une ligne de pliage sensiblement parallèle à au moins le premier groupe (G1, G2) d'articulations ou charnières, et définissant un volet d'extrémité (C1, C2) du tapis (1) qui, dans la configuration étendue du tapis (1), est plié par rapport à la partie horizontale adjacente du tapis et, dans la configuration contractée, est étendu et sensiblement coplanaire avec la partie horizontale adjacente du tapis (1).

5. Tapis selon la revendication 4, dans lequel, dans la direction à angle droit de ces articulations ou charnières (A1-A3, A4-A6, B1, B2), au moins ce premier volet d'extrémité (C1, C2) du tapis (1) a une extension sensiblement égale à la réduction de l'extension du tapis (1) quand il passe de la configuration étendue à la configuration contractée.

6. Tapis selon l'une quelconque des revendications précédentes, associé avec des moyens de retenue (5) adaptés pour maintenir le tapis (1) dans la configuration contractée.

7. Tapis selon la revendication 6, dans lequel les moyens de retenue comprennent une pluralité d'ouvertures (5) pratiquées dans le tapis (1) et adaptées pour venir en prise avec des saillies correspondantes disposées sur la surface de chargement (2).

8. Tapis selon la revendication 6 ou 7, dans lequel les moyens de retenue comprennent des éléments de connexion microcrochet/microboucle.

9. Tapis selon l'une quelconque des revendications précédentes, dans lequel les articulations ou charnières (A1-A3, A4-A6, B1, B2) sont des articulations ou charnières intégrées faites d'un seul bloc avec le tapis (1).
